# EUROPÄISCHE PATENTANMELDUNG

(11) **EP 1 358 996 A1**
(43) Veröffentlichungstag der Anmeldung: **05.11.2003**
(21) Anmeldenummer: 02026701.9
(22) Anmeldetag: 29.11.2002
(51) Int. Cl.: B29C 73/02, B29C 73/16

(54) **Reifenreparatursystem**

(30) Priorität: 03.05.2002 DE 10219926
(71) Anmelder: ADAM OPEL AG, 65423 Rüsselsheim (DE)
(72) Erfinder: Zerjeski, Frank, Dipl.-Ing., 55299 Nackenheim (DE); Brünjes, Arend, Dipl.-Ing., 64569 Nauheim (DE)

(57) **Zusammenfassung**

Es ist ein Reifenreparatursystem offenbart, bestehend aus einem vorzugsweise im Kofferraum eines Fahrzeugs ortsfest angeordneten Reifenreparatursets mit einem Kompressor (7;27), einem in einen Reifen, vorzugsweise über ein Luftventil einzubringen Dichtmittel, wobei der Kompressor entweder abnehmbar gehaltert ist, um ihn für einen unmittelbaren Anschluss an das Luftventil eines zu reparierenden Reifens anzuschließen, oder mit einem vorzugsweise aufrollbaren Verbindungsschlauch (31) versehen ist, um ihn über den Verbindungsschlauch an das betreffende Luftventil anzuschließen. Gemäß der Erfindung ist das Reifenreparaturset in einer Verkleidung des Fahrzeugs, vorzugsweise einer Verkleidung im Kofferraumbereich integriert. Die Bestandteile des Reifenreparatursets können dabei entweder auf der rückwärtigen Seite einer Blende angeordnet bzw. befestigt sein oder können in einen Rahmenblock eingesetzt sein, der durch eine oder durch mehrere Blenden abgedeckt sein kann, so dass die Aufbewahrung des Reparatursets formschön in der Verkleidung erfolgt.

## Beschreibung

Die Erfindung betrifft ein Reifenreparatursystem nach dem Anspruch 1.

Es sind bereits Reifenreparatursysteme bekannt, die unter der Bezeichnung "Tire Repair Kit" im Handel vertrieben werden und die entweder als mobile Pakete ausgebildet sind und daher beispielsweise nachträglich von einem Kraftfahrzeugbesitzer erworben und dann im Kofferraum eines Kraftfahrzeugs aufbewahrt werden können, oder als stationäre Systeme ausgebildet sind, die zumeist an Halterungen im Kofferraum angefügt werden.

Tire Repair Kits bestehen aus einem Kompressor, einer Dichtmittelflasche und einem Schlauchpaket, welches die Luft vom Kompressor in den Reifen befördert und diesen wieder aufpumpt. Das Dichtmittel wird entweder vorher von Hand durch das Reifenventil eingedrückt oder bei automatischen Füllsystemen zwischen Kompressor und Reifen geschaltet. In diesem Fall drückt der Kompressor das Dichtmittel in den Reifen. Diese Systeme werden zur Zeit von verschiedenen Anbietern vertrieben. Vorteile dieser Systeme sind: Gewichtsreduzierung durch Entfall des Reserveradreifens, geringer Platzbedarf, Komfortgewinn für den Kunden da kein Reifenwechsel notwendig ist; einfache Handhabung und zusätzliche Optionen wie Verwendung um Freizeitgeräte aufzupumpen (Luftmatratze, Fahrrad, Boot usw.). Der Einbau als stationäre Anlage bietet folgende Vorteile: 1) Ein mobiler Kompressor kann z. B. zu Hause zum Aufpumpen der Fahrräder aus dem Auto genommen werden, was dazu führen kann, dass das Fahrzeug benutzt wird und keinen Kompressor dabei hat. Eine stationäre Anlage verbleibt hierbei immer im Fahrzeug, bietet aber die gleichen Möglichkeiten. 2) Ein mobiler Kompressor ist beim Crash ein "gefährliches", da herumfliegendes Bauteil; ein stationäres System ist fest mit dem Fahrzeug verbunden. 3) Ein mobiler Kompressor ist für den Kunden nicht direkt mit dem Fahrzeug verbunden, es ist so nicht direkt als zusätzliche "Option" des Fahrzeuges zu erkennen. Ein Fahrzeug wird daher durch einen stationären Kompressor aufgewertet. 4) Ein mobiler Kompressor muss erst an den Zigarettenanzünder angeschlossen werden, ein stationäres System ist immer einsatzbereit und mit der Fahrzeugelektrik fest verbunden. Die Bedienung und die Handhabung wird so erheblich erleichtert. 5) Zudem ist die Zeit, um ein Fahrzeug wieder instand zu setzen, erheblich kürzer als bei einem Reifenwechsel, und die Zeit in der Gefahrenzone verkürzt sich gegenüber einem mobilen System nochmals erheblich. Die stationäre Unterbringung ermöglicht dabei einen wesentlich schnelleren Einsatz als ein mobiles System für den Kunden.

Die herkömmlichen Reifenreparatursysteme sind auch insofern mit Nachteilen behaftet als Teile des Reifenreparatursystems verloren gehen können, so dass das gesamte Reparatursystem unbrauchbar wird, oder vergessen wird, das Reparatursystem nach seiner Verwendung wieder an seinen Aufbewahrungsplatz zurück zu legen.

Die der Erfindung zu Grunde liegende Aufgabe besteht daher darin, ein Reifenreparatursystem zu schaffen, welches keinen Laderaum des betreffenden Fahrzeugs beansprucht und bei dem die Gefahr, dass Einzelteile des Reifenreparatursystems verloren gehen, weitgehend ausgeschlossen werden kann.

Zur Lösung dieser Aufgabe schafft die vorliegende Erfindung ein Reifenreparatursystem, bestehend aus einem vorzugsweise im Kofferraum eines Fahrzeugs ortsfest angeordneten Reifenreparaturset mit einem Kompressor, einem in einen Reifen vorzugsweise über ein Luftventil einzubringenden Dichtmittel, wobei der Kompressor entweder abnehmbar gehaltert ist, um ihn für einen unmittelbaren Anschluss an das Luftventil eines zu reparierenden Reifens anzuschließen, oder mit einem vorzugsweise aufrollbaren Verbindungsschlauch versehen ist, um ihn über den Verbindungsschlauch an das betreffende Luftventil anzuschließen, wobei das Reifenreparaturset in einer Verkleidung des Fahrzeugs, vorzugsweise in einer Verkleidung im Kofferraumbereich, integriert ist.

Eine besonders vorteilhafte Ausgestaltung der Erfindung besteht darin, dass das Reifenreparaturset hinter einer vorzugsweise mit Öffnungen versehenen Blende angeordnet ist, hinter welcher die Bestandteile des Reparatursets abnehmbar angehängt sind.

Dabei können die Bestandteile des Reparatursets entweder vollständig an der Blende selbst befestigt sein oder aber nur zum Teil an der Blende befestigt sein, wobei ein anderer Teil des Reparatursets am Verkleidungsbereich des Fahrzeugs angeordnet bzw. befestigt sein kann.

Eine besonders vorteilhafte Ausgestaltung der Erfindung besteht darin, dass das Reifenreparaturset in einem vorzugsweise aus geschäumtem Kunststoff hergestellten Rahmenblock eingesetzt ist.

Der Rahmenblock kann durch eine Blende zumindest teilweise abgedeckt sein, wobei an der Innenseite der Blende Halterungselemente und/oder Halterungsvorsprünge zur Halterung der Bestandteile des Reifenreparatursets vorgesehen sind.

Dieser Rahmenblock kann entweder so gestaltet sein, dass er nur für die Aufnahme aller Bestandteile des Reparatursets ausgelegt ist, oder auch so konstruiert sein, dass er neben den Bestandteilen des Reparatursets auch weiter Komponenten aufnehmen kann, wie beispielsweise einen Wickelmechanismus für einen Luftschlauch, einen Abschlepphaken, eine Flasche usw.

In dem Rahmenblock können Ausnehmungen ausgebildet sein, die zur Aufnahme von zusätzlichen Einrichtungen und zur Aufnahme der einzelnen Bestandteile des Reifenreparatursets dienen und deren Innengestalt wenigstens einem Teil der Außengestalt einer jeweiligen Komponente bzw. Bestandteil entspricht. Dadurch können dann die einzelnen Komponenten bzw. Bestandteile formschlüssig in die jeweiligen Ausnehmungen eingesetzt und in diesen vibrationsfrei gehaltert werden.

In Verbindung mit der genannten Blende können neben den Bestandteilen des Reifenreparatursets ebenfalls zusätzliche Einrichtungen, insbesondere wenigstens eine Steckdose und/oder ein Manometer und/oder ein Druckablassknopf und/oder ein Ein-/Ausschalter angeordnet sein.

In dem genannten Rahmenblock können neben den Bestandteilen des Reifenreparatursets weitere zusätzliche Einrichtungen, insbesondere wenigstens eine Steckdose und/oder ein Manometer und/oder ein Druckablassknopf und/oder ein Ein-/Ausschalter angeordnet sein.

Um die Verkleidung, welche das Reifenreparaturset aufnimmt, möglichst formschön zu gestalten, kann die Blende an der Verkleidung über eine Klappverriegelung befestigbar sein, so dass die Blende nach ihrer Verriegelung Bestandteil der Verkleidung selbst wird.

Im einzelnen kann die Erfindung dadurch eine vorteilhafte Ausgestaltung erfahren, dass der Kompressor fest mit einer Stromversorgung verkabelt ist. In der Verkabelung kann in vorteilhafter Weise ein trennbarer Steckkontakt enthalten sein, so dass der Kompressor auch notfalls nachträglich problemlos installiert werden kann oder auch durch einen neuen Kompressor ersetzt werden kann.

Um zu vermeiden, dass Bestandteile des Reifenreparatursets durch Verwendung desselben verloren gehen, können sämtliche Bestandteile des Reifenreparatursets fest installiert sein, wobei dann ein herausziehbarer Luftschlauch vorgesehen ist und hinter der Blende oder in dem genannten Rahmenblock eine von Hand betätigbare oder auch elektrisch betätigbare Wickelvorrichtung vorgesehen ist, um den Verbindungsluftschlauch aufzuwickeln und abzuwickeln, der mit dem Kompressor fest verbunden ist.

Eine weitere Ausgestaltung der Erfindung besteht darin, dass wenigstens einige Ausnehmungen in dem Rahmenblock zur Aufnahme von Adaptervorrichtungen ausgebildet sind, insbesondere einer Fahrradventil-Adaptervorrichtung, so dass der Kompressor mit dem herausziehbaren Luftschlauch auch zum Aufpumpen von Fahrradschläuchen verwendet werden kann.

Um eine besonders einfache Erneuerung des Reifenreparatursets zu ermöglichen, kann gemäß einer weiteren Ausführungsform der Erfindung die Blende zusammen mit dem Rahmenblock abnehmbar ausgebildet sein. Der Rahmenblock kann insbesondere bei dieser Ausführungsform zusammen mit den darin aufgenommenen Bestandteilen des Reifenreparatursets abnehmbar ausgebildet sein.

Gemäß einer weiteren vorteilhaften Ausführungsform der Erfindung kann die Blende aus mehreren gelenkig miteinander verbundenen Blendenelementen gebildet sein, wodurch dann verhindert werden kann, dass die Blende verloren geht, wenn beispielsweise vergessen wird, nach der Verwendung des Reifenreparatursets die Blende wieder an der Verkleidung zu verriegeln. (Nur jeweils ein Blendenelement wird entriegelt während ein anderes damit gelenkig verbundenes Blendenelement verriegelt bleibt).

Die gelenkige Verbindung zwischen den Blendenelementen erfolgt in vorteilhafter Weise mit Hilfe einer Materialverdünnungsstelle, die beispielsweise linienförmig ausgebildet sein kann, so dass dadurch ein Blendenelement unabhängig von einem anderen Blendenelement aufgeklappt werden kann.

Die Blende kann ferner als eine mit einer Schlauchklemmvorrichtung ausgestattete Öffnung ausgebildet sein, um den Luftschlauch aus dem Bereich hinter der Blende herausziehen und zurückschieben zu können, wobei die Schlauchklemmvorrichtung zweckmäßigerweise von Hand entriegelbar ist und auch wieder verriegelbar ist, so dass ein Luftverbindungsschlauch fest und wackelfrei in Lage gehalten wird.

In einer weiter bevorzugten Ausführungsform ist der Rahmenblock aus wenigstens zwei zusammenfügbaren Teilblöcken aufgebaut. Diese Teilblöcke können so ausgestaltet sein, dass sie jeweils Bestandteile des Reifenreparatursets aufnehmen können. Zugleich können diese Teilblöcke voneinander getrennt und dann unabhängig voneinander verwendet werden. So ist es bei dieser Ausführungsform vorteilhaft möglich, nur einen Teil des Rahmenblocks im Bedarfsfall aus seiner Verstauung im Fahrzeug herauszunehmen, den anderen Teil aber im Fahrzeug zu belassen. Wird bspw. der Kompressor samt seiner Bedienungs- bzw. Instrumentenkonsole in einem Teil des Rahmenblocks untergebracht und andere Teile des Reifenreparatursets wie etwa eine Dichtmittelflasche und der auf einer Haspel aufgewickelte Luftschlauch in einem anderen Teil des Rahmenblocks verstaut, so genügt es, im Bedarfsfall den Teilrahmenblock im Fahrzeug verstaut zu lassen, welcher den Kompressor enthält, da die Bedienung des Kompressors nicht in unmittelbarer Reifennähe erfolgen muss. Der Kompressor verfügt auf seiner Bedienungskonsole überdies über alle erforderlichen Armaturen wie bspw. ein Manometer, die eine Befüllen des Reifens mit Luft und die Überwachung dieses Vorgangs aus dem Fahrzeuginneren heraus zulässt. Zur Reparatur des defekten Reifens mittels des Reifenreparatursystems genügt es daher, den aufgewickelten Schlauch und die Dichtmittelflasche aus dem Wagen zu nehmen und betriebsbereit aufzustellen. Diese Unterteilung erlaubt somit einen vorteilhaften Einsatz des Reifenreparatursystems unter verringertem Aufwand. Es ist also nicht erforderlich, den gesamten Rahmenblock aus dem Wagen zu heben, auch wenn dies unverändert möglich bleibt.

Das Reifenreparaturset kann in bestimmten Ausführungsformen derart im Fahrzeug untergebracht sein, dass ein zugehöriger Rahmenblock den Zugang zu gewissen Bereichen innerhalb des Fahrzeug, wie etwa den vom Fahrzeuginnenraum zugänglichen Rückleuchten des Fahrzeugs samt ihrer elektrischen Anschlüsse, abdeckt. Zur Wartung dieser Rückleuchten ist es bei der letztgenannten Ausführungsform des Reifenreparatursystems aufgrund des getrennt vorliegenden Rahmenblocks des Reifenreparatursystems nicht nötig, das gesamte Reifenreparatursystem aus seiner Verstauungsposition herauszuheben. Es ist vorteilhaft möglich, nur den Teil des Rahmenblocks herauszunehmen, der den erforderlichen Zugang zu den vom Reifenreparatursystem verbauten Fahrzeugteilen gewährt.

In einer weiter bevorzugten Ausführungsform weist der Rahmenblock des Reifenreparatursystems wenigstens eine Öffnung auf, durch welche bspw. Leitungen wie ein Luftschlauch oder eine elektrische Leitung geführt werden können. Diese Öffnung erlaubt auf vorteilhafte Weise bspw., für den Kompressor benötigte Zuleitungen von der Rückseite des Rahmenblocks durch den Rahmenblock hindurch mit dem Kompressor zu verbinden. So können bspw. bestimmte Leitungen verborgen verlaufen, ohne optisch zu stören, oder gar im Weg zu sein, und sind damit vor Beschädigung optimal geschützt.

In einer weiter bevorzugten Ausführungsform weist der Rahmenblock des Reifenreparatursystems Anschlüsse auf, die geeignet sind, den Rahmenblock beim Einsetzen in seine Aufnahmevorrichtung bzw. an den zur Aufnahme des Reifenreparatursystems vorgesehenen Raum im Fahrzeuginneren direkt mittels am Fahrzeug vorgesehener Anschlüsse mit der Bordelektronik elektrisch zu verbinden. Mittels im Rahmenblock vorgesehener Anschlüsse können dann jene Komponenten, die wie der Kompressor des Reifenreparatursystems elektrische Leistung benötigen, an die Bordelektronik angeschlossen werden. Diese Ausführungsform spart in vorteilhafter Weise Leitungen ein und erleichtert den Vorgang des elektrischen Verbindens.

Eine weiter bevorzugte Ausführungsform weist eine Haspel zum ordentlichen Aufwickeln des Luftschlauchs auf. Somit trägt diese Haspel vorteilhaft dazu bei, bspw. ein Verknoten oder Verwirren des Schlauchs zu vermeiden. Auch wirkt die Benutzung der Haspel einem Herumliegen der losen Schlauchenden entgegen, was vorteilhaft zu Ordnung, Übersichtlichkeit, Schonung des Schlauchmaterials, Platzeinsparung gegenüber einem wenig ordentlich versorgten Schlauch, und Senken einer durch lose herumliegende Schlauchteil ausgehenden Gefahr beiträgt.

Bei einer weiter bevorzugten Ausführungsform kann die Haspel, auf welche der Verbindungsschlauch aufgewickelt ist, in vorteilhafter Weise als Standfuß für die Dichtmittelflasche genutzt werden, so dass diese bei ihrer Benutzung aufrecht stehen bleibt und nicht umfallen kann.

Bei einer weiter bevorzugten Ausführungsform wird die Haspel mit dem aufgewickelten Schlauch in einer Box verwahrt und durch diese vorteilhaft vor Beschädigung geschützt und vor ungewolltem Abwickeln bewahrt.

In einer weiteren, bevorzugten Ausführungsform kann die Haspel mit Schlauch und Box in einer Ausnehmung oder Halterung in einem Teilblock oder im Rahmenblock mit den oben diskutierten Vorteilen aufbewahrt werden.

Weiterhin kann die Haspel eine Ausnehmung oder Halterung zur Aufnahme eines Anschlussadapters aufweisen. Am Anschlussadapter können der vom Kompressor kommende und der zum Reifen führende Schlauch bzw. Schlauchabschnitt angeschlossen werden, sowie die Dichtmittelflasche aufgesetzt oder -geschraubt werden, damit das Dichtmittel entnommen werden kann.

Im folgenden wird die Erfindung anhand von Ausführungsformen und unter Hinweis auf die beigefügten Zeichnungen näher erläutert. Es zeigen:
- Fig. 1: eine Draufsicht auf eine Blende zum Halten eines Reifenreparatursets gemäß der Erfindung;
- Fig. 2: eine Seitenansicht der Blende mit dem Reifenreparaturset;
- Fig. 3: eine zweite Ausführungsform einer Blende, die aus mehreren (zwei) Blendenelementen besteht, die gelenkig miteinander verbunden sind;
- Fig. 4: eine Seitenansicht der Blende nach Fig. 3 mit einem Reifenreparaturset;
- Fig. 5: eine Draufsicht auf einen Rahmenblock gemäß der vorliegenden Erfindung;
- Fig. 6: bis
- Fig. 8: jeweils Draufsichten auf Bestandteile des Reifenreparatursets;
- Fig. 9: eine Draufsicht auf einen Rahmenblock mit einer in diesem integrierten Blende gemäß einer weiteren Ausführungsform der Erfindung;
- Fig. 10: eine Seitenansicht des Rahmenblocks von Fig. 9;
- Fig. 11: eine perspektivische, vereinfachte Draufsicht auf ein funktionsbereit aufgestelltes erfindungsgemäßes Reifenreparatursystem gemäß einer weiteren Ausführungsform der Erfindung;
- Fig. 12: eine perspektivische, schematische Ansicht eines Reifenreparatursystems sowie eines zugehörigen Rahmenblocks gemäß einer weiteren Ausführungsform der Erfindung;
- Fig. 13: eine perspektivische, vereinfachte Ansicht eines in einem Gehäuse integrierten Kompressors mit zugehöriger Bedienungskonsole des in den Fig. 11 und 12 dargestellten Reifenreparatursystems; und
- Fig. 14: eine perspektivische Ansicht der in Fig. 11 und 12 dargestellten Haspel des erfindungsgemäßen Reifenreparatursystems gemäß Fig. 11 bis 13.

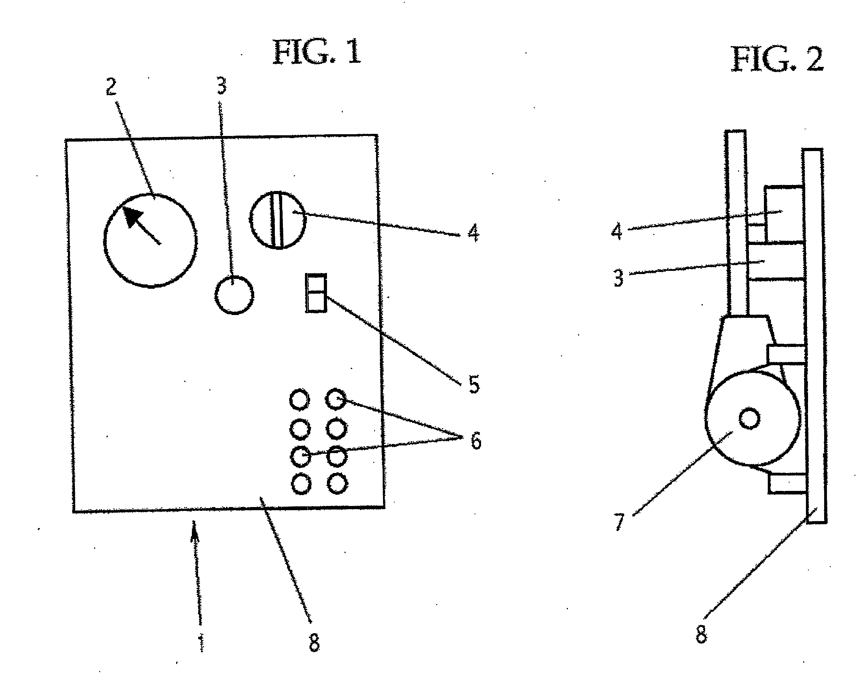

In Fig. 1 ist ein Reifenreparatursystem mit Merkmalen nach der Erfindung allgemein mit 1 bezeichnet und besteht aus einer Blende 8, in der mehrere Belüftungsöffnungen 6 ausgebildet sind und an der ein Ein-/ Ausschalter 5 vorgesehen ist, ebenso eine Steckdose, wie z. B. eine 12-Volt-Steckdose, befestigt ist und weitere Einrichtungen vorgesehen sind, wie z. B. ein Druckablassknopf 3 und ein Manometer 2.

Der wichtigste Bestandteil des Reifenreparatursets ist ein Kompressor 7, der ebenfalls an der Blende 8 befestigt ist und mit einem nicht näher bezeichneten Luftschlauch verbunden ist.

Es sei darauf hingewiesen, dass die vorliegende Erfindung nicht auf die zuvor erläuterten Bestandteile beschränkt ist und an der Blende 8 auch weitere Einrichtungen befestigt sein können, wie z. B. ein Behältnis zur Aufbewahrung eines Dichtmittels, welches entweder über den Luftschlauch selbst oder vor dem Aufpumpen eines Reifens in den betreffenden Reifen über das Luftventil eingebracht wird.

Die gezeigte Blende 8 kann über nicht näher dargestellte Verriegelungselemente an einer Verkleidung im Kofferraumbereich eines Fahrzeugs formschlüssig mit der Verkleidung eingesetzt werden und verriegelt werden, wobei die Erfindung aber nicht auf den Kofferraumbereich eines Fahrzeugs beschränkt ist. Eine weitere Möglichkeit der Unterbringung des Reifenreparatursets besteht darin, diesen auch in einer Verkleidung des Fahrgastraumes unterzubringen und auch in einem Radkasten.

Diese Möglichkeiten gelten für sämtliche Ausführungsformen der vorliegenden Erfindung.

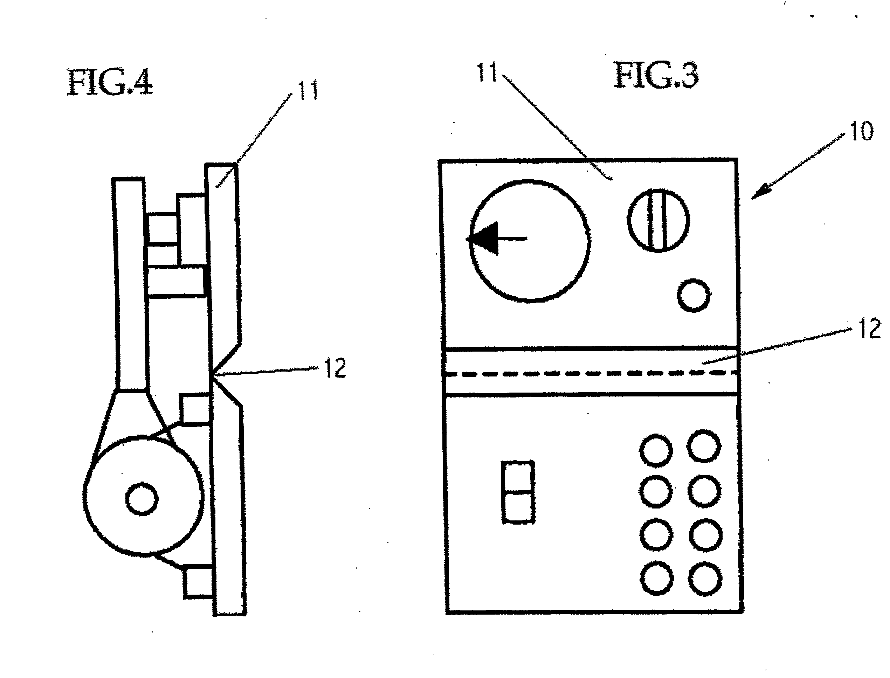

Eine zweite Ausführungsform der Erfindung ist in den Fig. 3 und 4 veranschaulicht. Fig. 3 zeigt eine Draufsicht auf eine Blende 11, die ähnlich wie bei der Ausführungsform nach Fig. 1 und Fig. 2 alle Bestandteile eines Reifenreparatursets haltern kann.

Die in Fig. 3 gezeigte Blende 11 ist zweiteilig ausgeführt und besteht aus einem unteren Abschnitt und einem oberen Abschnitt, die über eine Gelenkverbindungsstelle 12 gelenkig miteinander verbunden sind. Beide Blendenelemente können in einer Verkleidung eines Fahrzeugs unabhängig voneinander verriegelt sein, so dass entweder das eine Blendenelemente aufgeklappt werden kann, um z. B. den Luftschlauch zugänglich zu machen, oder das andere Blendenelement aufgeklappt werden kann, um den Kompressor zugänglich zu machen.

Diese zweite Ausführungsform der Erfindung ist allgemein mit 10 bezeichnet.

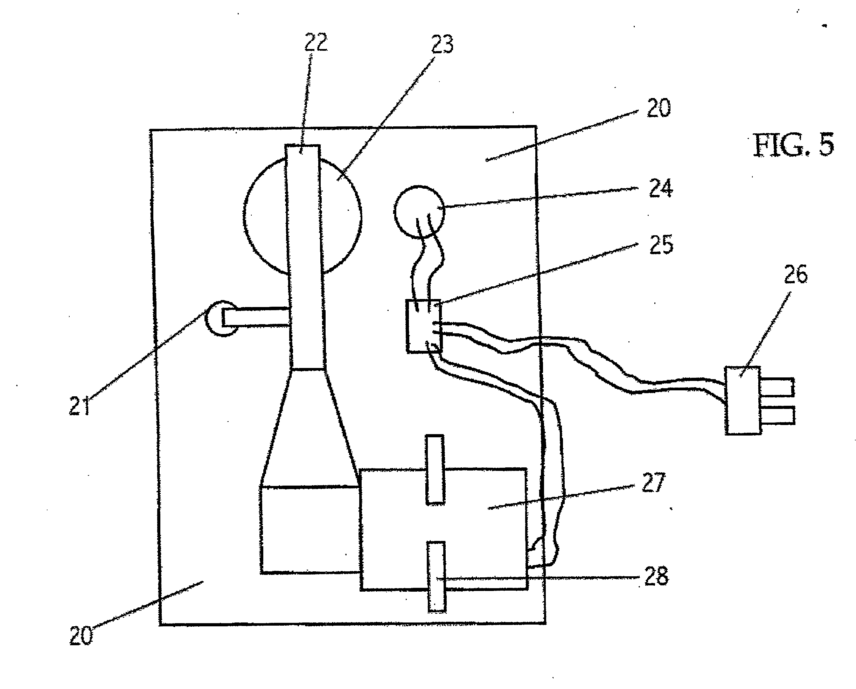

In Fig. 5 ist eine dritte Ausführungsform mit Merkmalen nach der vorliegenden Erfindung dargestellt und diese umfasst eine Blende 20, die zur Aufnahme von weiteren Bestandteilen eines Reifenreparatursets ausgebildet ist. An dieser Blende kann z. B. ein Stromversorgungsanschluss 26 über eine Kabelverbindung angeschlossen sein, die Kabelverbindung führt zu einem Schalter 25, über den weitere Stromversorgungsverbindungen hergestellt werden können, z.B. zu einer 12-Volt-Steckdose 24 und auch zu einem Motor und Kompressor 27 sowie zu einer Klemmverbindung für einen Motor 28. Ferner kann an der Blende 20 auch eine Druckreguliereinrichtung 21 vorgesehen sein. Mit dem Bezugszeichen 23 ist ein Manometer und mit dem Bezugszeichen 22 ein Luftaustritt bezeichnet.

Bei der in Fig. 5 gezeigten Ausführungsform besteht auch die Möglichkeit, anstelle der Blende 20 einen entsprechend gestalteten Rahmenblock zu realisieren, der die genannten Elemente in entsprechend gestalteten Ausnehmungen aufnimmt.

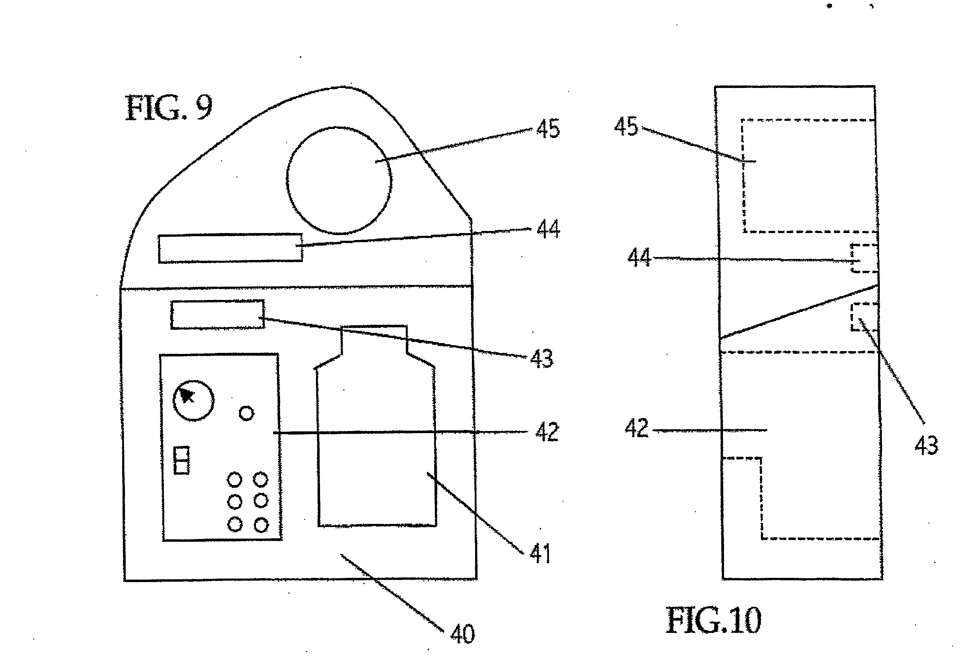

Eine alternative Ausführungsform mit einem Rahmenblock ist in den Fig. 9 und 10 gezeigt. Bei der Ausführungsform nach Fig. 9 ist ein Rahmenblock mit 40 bezeichnet. Dieser kann derart ausgebildet sein, dass er neben den Bestandteilen des Reifenreparatursets auch weitere Komponenten in entsprechend gestalteten Ausnehmungen aufnimmt. In der Ausnehmung 41 kann beispielsweise eine Flasche aufgenommen werden, in einer Ausnehmung 43 können spezifische Adapterstücke aufgenommen werden, eine Ausnehmung 44 ist für die Aufnahme und Halterung eines Abschlepphakens vorgesehen und eine kreisförmige Ausnehmung 45 bildet einen Bauraum für eine Schlauchaufwickelrolle. Die Bestandteile des Reifenreparatursets können ähnlich wie bei der Ausführungsform nach den Fig. 1 und 2 hinter einer Blende 42 vorhanden sein und können entweder an der Blende 42 befestigt sein oder können in entsprechend gestaltete Ausnehmungen eingesetzt sein, die in dem Rahmenblock 40 hinter der Blende 42 ausgebildet sind.

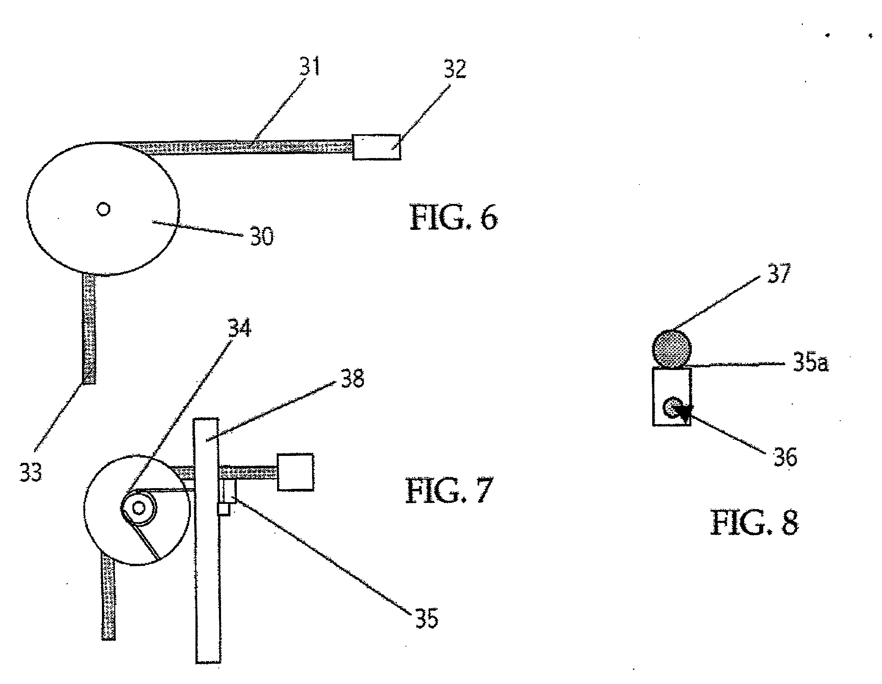

In den Fig. 6, 7 und 8 sind Einzelheiten eines Wickelmechanismus zum Abziehen und Rückführen eines Luftschlauches 31 veranschaulicht. In Fig. 6 ist mit 30 eine Schlauchrolle bezeichnet mit einem darauf aufgewickelten Schlauch 31 und einem Ventilanschlussteil 32, wobei das andere Ende des Schlauches 31 bei 33 zu einem nicht näher gezeigten Kompressor führt. In Fig. 7 ist ein automatischer Aufrollmechanismus mit 34 bezeichnet und dieser arbeitet zusammen mit einem Klemmmechanismus 35, der an einer Blende 38 im Bereich einer nicht näher bezeichneten Durchtrittsöffnung ausgebildet ist. Der Klemmmechanismus 35 kann ein Element 36 (siehe Fig. 8) enthalten, um den Einklemmzustand des Schlauches zu lösen, so dass das Ende des Schlauches im Bereich des Anschlussteils 32 ergriffen werden kann und herausgezogen werden kann. Nach dem Zurückführen des Schlauches, der mit Hilfe des Aufrollmechanismus 34 automatisch aufgerollt wird, kann der Klemmmechanismus 35 über das Betätigungselement 36 wieder in den Klemmzustand versetzt werden, so dass der Schlauch bzw. das Schlauchende wackelfrei in Lage gehalten wird.

In Fig. 8 ist der Klemmbereich des Schlauches mit 37 bezeichnet und die Klemmstelle, an der der Schlauch eingeklemmt wird, ist mit 35a bezeichnet. Bei der gezeigten Ausführungsform arbeitet der Klemmmechanismus 35 mit der Öffnung in der Blende 38 zusammen, wobei die Erfindung jedoch nicht auf diese spezifische Klemmkonstruktion beschränkt ist.

Eine weitere Möglichkeit zur wackelfreien Halterung des Schlauchendes besteht beispielsweise darin, das Durchtrittsloch des Schlauches mit einem zylinderförmigen, erweiterten Abschnitt zu versehen, in den das Anschlussteil 32 dann einrastet, wenn der Schlauch voll aufgewickelt ist.

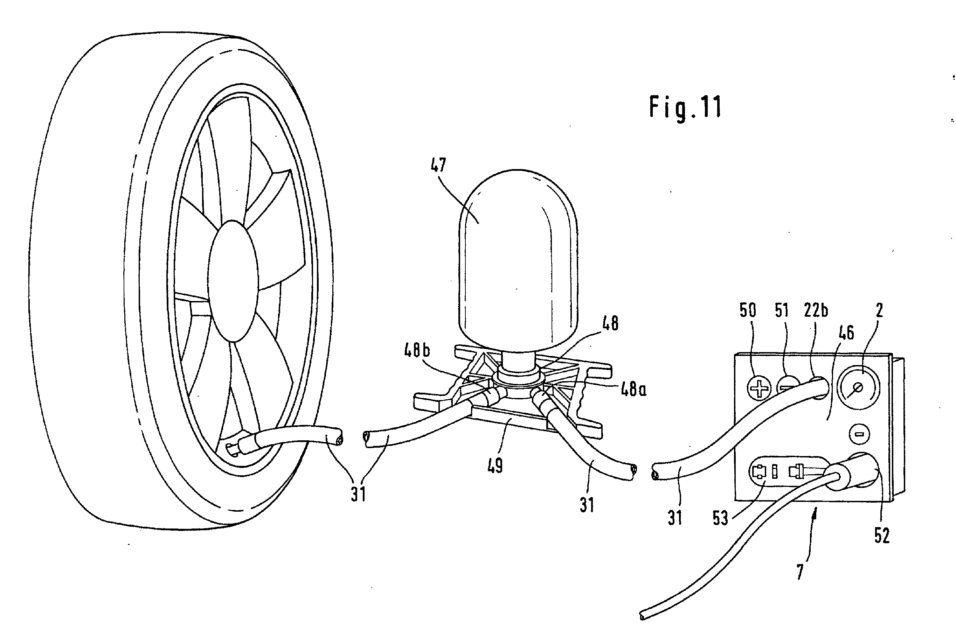

Eine weitere, besonders bevorzugte Ausführungsform des Reifenreparatursystems zeigen die Fig. 11 bis 14, wobei gleiche Bauteile oder ähnlich wirkende Komponenten mit gleichen Bezugszeichen bezeichnet sind.

Fig. 11 zeigt das Reifenreparatursystem - schematisch vereinfacht - funktionsbereit aufgestellt. Der Luftschlauch 31 führt in seinem abgerollten und betriebsbereiten Zustand von einem frontseitig in einer Bedienungskonsole 46 integrierten Druckluftanschluss 22b, welcher mit dem nicht näher dargestellten Luftaustritt des Kompressors verbunden ist, zu einer Dichtmittelflasche 47. Diese Dichtmittelflasche 47 ist mittels eines als Aufsatz ausgebildeten Anschlussadapters 48 mit der Flaschenöffnung nach unten zeigend auf eine Haspel 49 aufgesteckt. Vom Kompressor 7 wird über den Luftschlauch 31 Luft bei Betätigen eines "+" -Knopfs bzw. Lufteinfüllknopfs 50 auf der Bedienungskonsole 46 über eine am Anschlussadapter 48 vorgesehenen Öffnung 48a in die Dichtmittelflasche 47 gepresst. Das in der Dichtmittelflasche 47 enthaltene Dichtmittel wird über eine weitere Öffnung 48b des Anschlussadapters 48 aus der Flasche heraus und durch einen anderen Teil des Schlauchs 31 von der Dichtmittelflasche 47 zum Reifenventil geführt. Auf diese Weise wird dem Reifen Luft, aber auch das bei der Reparatur benötigte Dichtmittel zugeführt. Ein Einbringen des Dichtmittels in den Reifen von Hand entfällt hierbei.

Die in Fig. 11 gezeigt Haspel 49 dient während der Reifenreparatur als feste Stütze bzw. Befestigung der Dichtmittelflasche 47. Im nicht-aufgestellten Zustand des Reifenreparatursystems dient sie dem ordentlichen Aufwickeln des Luftschlauchs 31.

In Fig. 11 weist die Bedienungskonsole 46 neben dem erwähnten "+"-Knopf 50 zum Zuführen von Luft auch einen "-"-Knopf bzw. Luftablassknopf 51 zum Ablassen von Luft aus dem Reifen, das Manometer 2 zum Überprüfen des aktuellen Reifendrucks, einen Stromanschluss 52 zur Versorgung weiterer externer Verbraucher bei Bedarf mit Strom, oder zur alternativen externen Versorgung des Kompressors mit Strom, sowie eine Adapteraussparung 53 zum sicheren Verstauen von austauschbaren Adaptern, etwa zum Aufpumpen von Fahrradreifen oder dgl., auf. Auch der Anschlussadapter 48 mit den beiden Anschlüssen bzw. Öffnungen 48a, 48b für den Luftschlauch 31 kann in der Adapteraussparung 53 verstaut werden, um nicht verloren zu gehen. Aus denselben Gründen kann der Anschlussadapter 48 jedoch an der Dichtmittelflasche 47 befestigt im Rahmenblock 40 verstaut oder in der Haspel 49 festgeklemmt belassen werden.

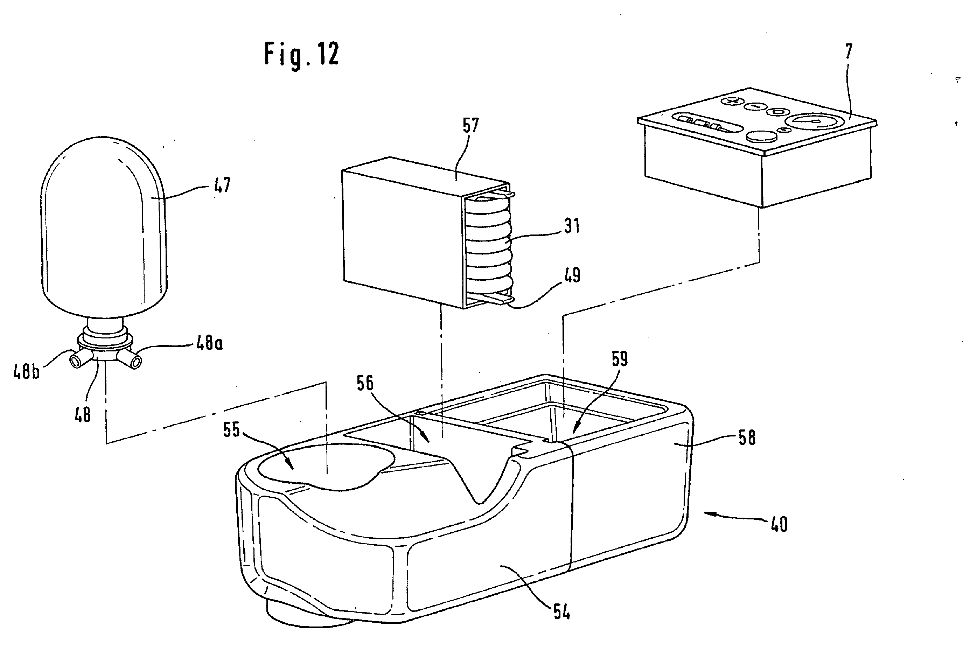

Fig. 12 zeigt die Bestandteile des Reifenreparatursystems und deutet an, wie sie im Rahmenblock 40 zu ihrer Unterbringung angeordnet werden. So finden die Dichtmittelflasche 47 und der auf der Haspel 49 aufgewickelte Schlauch 31 - bzw. seine Teilabschnitte - in einem Rahmenblockteil 54 des Rahmenblocks 40 in Ausnehmungen 55 und 56 Platz, wobei der aufgewickelte Schlauch 31 zusätzlich von einer Box 57 geschützt umgeben wird.

In einem zweiten Rahmenblockteil 58 des Rahmenblocks 40 befindet sich eine Ausnehmung 59 zur Aufnahme des Kompressors 7 bzw. des in einem von der Bedienungskonsole abgedeckten Gehäuse enthaltenen Kompressors samt Gehäuse.

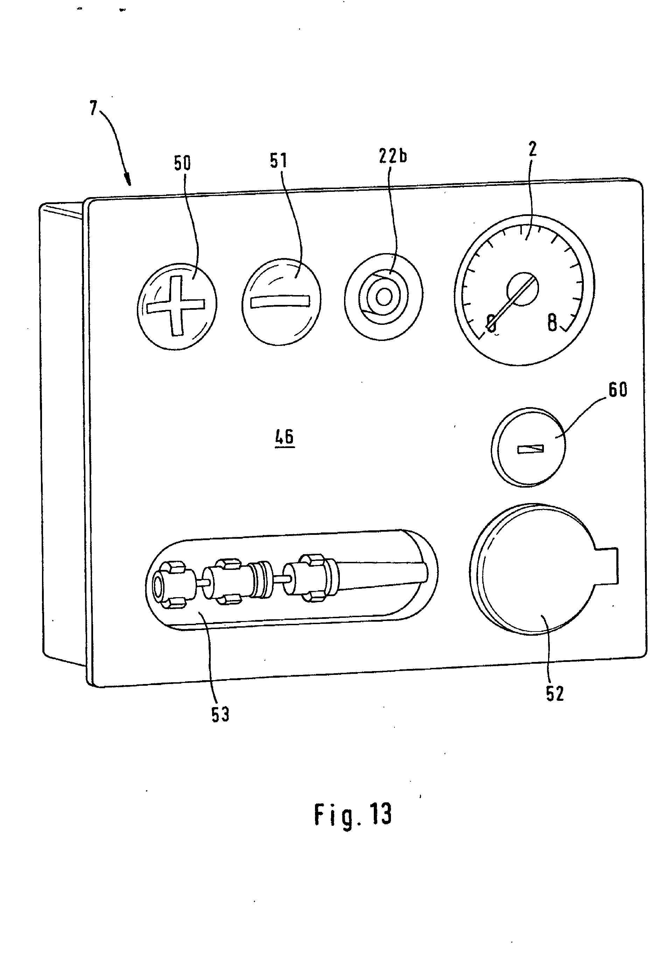

Fig. 13 zeigt eine weitere Ansicht der in Fig. 11 dargestellten Bedienungskonsole 46. Neben den bei der Diskussion der Fig. 11 bereits beschriebenen Elementen fällt das Schloss 60 ins Auge, welches mittels des Fahrzeugzündschlüssels bedient werden kann und bei entsprechender Einbindung in die Bordelektronik die Funktion des Kompressors 7 ermöglichen oder aber verhindern kann. Die Frontblende, welche die Bedienungskonsole 46 aufweist, kann abgenommen werden, damit der im Gehäuse integrierte Kompressor im Bedarfsfall zugänglich ist.

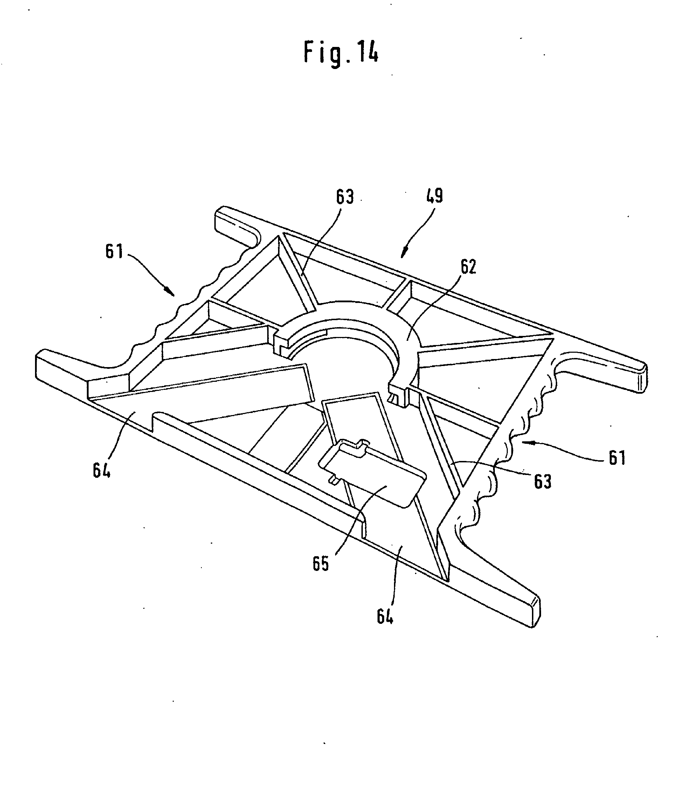

Fig. 14 stellt eine perspektivische Ansicht der Haspel 49 dar, wie sie zu den Fig. 11 und 12 bereits beschrieben wurde. Fig. 14 zeigt deutlich die profilierte Beschaffenheit der beiden Enden der Haspel. Diese sind mit Aufwickelführungen 61 zum besseren Aufwickeln des Schlauchs 31 bzw. seiner Teilabschnitte versehen. Die Haspel 49 enthält eine halbkreisförmige Ausnehmung 62 zum Aufnehmen des Anschlussadapters 48. Ferner weist die Haspel 49 Verstärkungsrippen 63 und diagonal verlaufende Aussparungen 64 auf, welche zur eng anliegenden Führung des vom Kompressor 7 kommenden Schlauchabschnitts und des zum Reifen führenden Schlauchabschnitts dienen. Eine Ausnehmung 65 dient als Durchsteckloch eines Schlauchabschnittendes zum Erleichtern des Aufwickelns des Schlauchs 31.

Die vorliegende Erfindung ist nicht auf die in den Figuren dargestellten Einzelheiten beschränkt. So kann beispielsweise der Aufwickelmechanismus auch von Hand betätigbar ausgebildet sein und es können weitere Ausnehmungen in dem Rahmenblock vorgesehen sein, um Elemente wie Ersatzlampen, Ersatzventile, Ersatzzündkerzen usw. aufzunehmen.

Sämtliche in den Zeichnungen dargestellten und in der Beschreibung erwähnten Einzelheiten sind für die Erfindung von Bedeutung.

Die vorstehend diskutierten Varianten und verschiedenen Ausführungsformen können nach Bedarf miteinander im Prinzip nach Belieben kombiniert werden, sei es, um Synergieeffekte zu erzielen oder verschiedene Aspekte weiter zu optimieren.

### Bezugszeichenliste

1 Reifenreparatursystem
2 Manometer
3 Druckablassknopf
5 Ein/Aus-Schalter
6 Belüftungsöffnungen
7 Kompressor
8 Blende
10 Zweite Ausführungsform
11 Blende
12 Gelenkverbindungsstelle
20 Blende
21 Druckreguliereinrichtung
22 Luftaustritt
22b Druckluftanschluss
23 Manometer
24 12-Volt-Steckdose
25 Schalter
26 Stromversorgungsanschluss
28 Motor
30. Schlauchrolle
31 Luftschlauch, aufgewickelter Schlauch
32 Ventilanschlussteil
33 zum Kompressor
34 Aufrollmechanismus
35 Klemmmechanismus
35a Klemmstelle
36 Betätigungselement
37 Klemmbereich
38 Blende
40 Rahmenblock
41 Ausnehmung für Flasche
42 Blende
43 Ausnehmung
44 Ausnehmung
45 Ausnehmung
46 Bedienungskonsole
47 Dichtmittelflasche
48 Anschlussadapter
48a Öffnung
48b Öffnung
49 Haspel
50 "+"-Knopf bzw. Lufteinfüllknopf
51 "-"-Knopf bzw. Luftablassknopf
52 Stromanschluss
53 Adapteraussparung
54 Rahmenblockteil
55 Ausnehmung für Flasche
56 Ausnehmung für Box mit Schlauch
57 Box
58 Rahmenblockteil
59 Ausnehmung für Kompressor
60 Schloss
61 Profilierung bzw. Aufwickelführung 62 Ausnehmung für Anschlussadapter
63 Verstärkungsrippen
64 Aussparung
65 Ausnehmung

## Patentansprüche

1. Reifenreparatursystem, bestehend aus einem vorzugsweise im Kofferraum eines Fahrzeugs ortsfest angeordneten Reifenreparaturset mit einem Kompressor (7; 27), einem in einen Reifen, vorzugsweise über ein Luftventil, einzubringenden Dichtmittel, wobei der Kompressor (7; 27) entweder abnehmbar gehaltert ist, um ihn für einen unmittelbaren Anschluss an das Luftventil eines zu reparierenden Reifens anzuschließen, oder mit einem vorzugsweise aufrollbaren Verbindungsschlauch (31) versehen ist, um ihn über den Verbindungsschlauch (31; 37) an das betreffende Luftventil anzuschließen, wobei das Reifenreparaturset in einer Verkleidung des Fahrzeugs, vorzugsweise in einer Verkleidung im Kofferraumbereich, integriert ist.

2. Reifenreparatursystem nach Anspruch 1, **dadurch gekennzeichnet, dass** das Reifenreparaturset hinter einer vorzugsweise mit Öffnungen (6) versehenen Blende (8; 42) angeordnet ist, hinter welcher die Bestandteile des Reifenreparatursets ortsfest oder abnehmbar angehängt sind.

3. Reifenreparatursystem nach Anspruch 1 oder 2, **dadurch gekennzeichnet, dass** das Reifenreparaturset in einem vorzugsweise aus geschäumtem Kunststoff hergestellten Rahmenblock (40) eingesetzt ist.

4. Reifenreparatursystem nach Anspruch 3, **dadurch gekennzeichnet, dass** der Rahmenblock (40) durch eine Blende (42) zumindest teilweise abgedeckt ist, wobei an der Innenseite der Blende (42) Halterungselemente und / oder Halterungsvorsprünge zur Halterung der Bestandteile des Reifenreparatursets vorgesehen sind.

5. Reifenreparatursystem nach Anspruch 3 oder 4, **dadurch gekennzeichnet, dass** in dem Rahmenblock (40) Ausnehmungen (41, 43, 44, 45, 55, 56, 59) ausgebildet sind, die zur Aufnahme von zusätzlichen Einrichtungen und Komponenten und der einzelnen Bestandteile des Reifenreparatursets dienen und deren Innengestalt wenigstens einem Teil der Außengestalt einer jeweiligen Komponente bzw. Bestandteils entspricht.

6. Reifenreparatursystem nach Anspruch 2 oder 4, **dadurch gekennzeichnet, dass** hinter der Blende (8; 42) neben den Bestandteilen des Reifenreparatursets zusätzliche Einrichtungen, insbesondere wenigstens eine Steckdose (4) und/oder eine Manometer (2) und/ oder ein Druckablassknopf (3) und/oder ein Ein-/Ausschalter (5) angeordnet ist bzw. sind.

7. Reifenreparatursystem nach einem der Ansprüche 3, 4 oder 5, **dadurch gekennzeichnet, dass** in den Rahmenblock (40) neben den Bestandteilen des Reifenreparatursets zusätzliche Einrichtungen, insbesondere wenigstens eine Steckdose und/oder ein Manometer und/oder ein Druckablassknopf und/oder ein Ein-/Ausschalter angeordnet ist bzw. sind.

8. Reifenreparatursystem nach Anspruch 7, **dadurch gekennzeichnet, dass** zusätzliche Einrichtungen in Ausnehmungen des Rahmenblocks (40) angeordnet sind.

9. Reifenreparatursystem nach einem der Ansprüche 2, 4 oder 6, **dadurch gekennzeichnet, dass** die Blende (8; 42) mit einer Klappverriegelung ausgestattet ist.

10. Reifenreparatursystem nach einem der Ansprüche 1 bis 9, **dadurch gekennzeichnet, dass** der Kompressor (7; 27) fest mit einer Stromversorgung verkabelt ist.

11. Reifenreparatursystem nach Anspruch 10, **dadurch gekennzeichnet, dass** in der Verkabelung ein trennbarer Steckkontakt enthalten ist.

12. Reifenreparatursystem nach einem der vorhergehenden Ansprüche, **gekennzeichnet durch** einen von Hand betätigbaren oder elektrisch betätigbaren Aufrollmechanismus (34) zum Auf- und Abwickeln des Verbindungsluftschlauches (31) des Kompressors (7; 27), der hinter der Blende (42) und/oder in dem Rahmenblock (40) angeordnet ist.

13. Reifenreparatursystem nach Anspruch 8, **gekennzeichnet durch** Ausnehmungen (43, 44, 53) in dem Rahmenblock (40) zur Aufnahme von Adaptervorrichtungen, insbesondere einer Fahrradventil-Adaptervorrichtung für den Luftschlauch.

14. Reifenreparatursystem nach einem der vorhergehenden Ansprüche, **dadurch gekennzeichnet, dass** die Blende (42) zusammen mit dem Rahmenblock (40) abnehmbar ausgebildet ist.

15. Reifenreparatursystem nach Anspruch 3 oder 4, **dadurch gekennzeichnet, dass** der Rahmenblock (40) zusammen mit den darin aufgenommenen Bestandteilen des Reifenreparatursets abnehmbar ausgebildet ist.

16. Reifenreparatursystem nach Anspruch 2 oder 4, **dadurch gekennzeichnet, dass** die Blende (11) aus mehreren gelenkig miteinander verbundenen Blendenelementen gebildet ist.

17. Reifenreparatursystem nach Anspruch 16, **dadurch gekennzeichnet, dass** die gelenkige Verbindung zwischen den Blendenelementen durch Materialverdünnungsstellen gebildet ist.

18. Reifenreparatursystem nach Anspruch 12, **dadurch gekennzeichnet, dass** in der Blende (38) eine mit einer Schlauchklemmvorrichtung (35) ausgestattete Öffnung zum Herausziehen und Zurückschieben des Verbindungsluftschlauches (31) ausgebildet ist.

19. Reifenreparatursystem nach Anspruch 18, **dadurch gekennzeichnet, dass** die Schlauchklemmvorrichtung (38) von Hand entriegelbar und verriegelbar ausgebildet ist.

20. Reifenreparatursystem nach einem der Ansprüche 1 bis 19, **dadurch gekennzeichnet, dass** der Rahmenblock (40) aus wenigstens zwei zusammenfügbaren und wieder lösbaren Teilblöcken (54, 58) aufgebaut ist.

21. Reifenreparatursystem nach Anspruch 20, **dadurch gekennzeichnet, dass** der Rahmenblock (40) wenigstens eine Öffnung zum Hindurchführen von Anschlüssen oder Leitungen aufweist.

22. Reifenreparatursystem nach Anspruch 21 oder 22, **dadurch gekennzeichnet, dass** der Rahmenblock (40) wenigstens einen Anschluss aufweist.

23. Reifenreparatursystem nach einem der vorangegangenen Ansprüchen, **dadurch gekennzeichnet, dass** es eine Haspel (49) zur Aufnahme des Verbindungsschlauchs (31) aufweist.

24. Reifenreparatursystem nach Anspruch 23, **dadurch gekennzeichnet, dass** die Haspel (49) mit dem aufgewickelten Schlauch (31) in einer separaten Box (57) aufbewahrbar ist.

25. Reifenreparatursystem nach Anspruch 24, **dadurch gekennzeichnet, dass** die Box (57) mit der Haspel (49) mit dem aufgewickelten Schlauch (31) in einer Ausnehmung (56) in einem Teilblock (54) oder im Rahmenblock (40) aufbewahrbar ist.

26. Reifenreparatursystem nach einem der vorangegangenen Ansprüche, **dadurch gekennzeichnet, dass** die Haspel (49) eine Ausnehmung (62) für die Aufnahme des Anschlussadapters (48) aufweist.
